(19)

**Europäisches Patentamt**

**European Patent Office**

**Office européen des brevets**

(11) **EP 4 531 272 A1**

(12) **EUROPEAN PATENT APPLICATION**

(43) Date of publication:
02.04.2025 Bulletin 2025/14

(21) Application number: 24190400.2

(22) Date of filing: 23.07.2024

(51) International Patent Classification (IPC):
$H02P\ 29/64^{(2016.01)}$     $G06N\ 3/0442^{(2023.01)}$
$H02P\ 21/00^{(2016.01)}$     $G06N\ 3/044^{(2023.01)}$
$G06N\ 3/084^{(2023.01)}$     $H02P\ 29/66^{(2016.01)}$
$G06N\ 3/0464^{(2023.01)}$     $G06N\ 3/0499^{(2023.01)}$

(52) Cooperative Patent Classification (CPC):
H02P 21/0014; G06N 3/044; G06N 3/0442;
G06N 3/0464; G06N 3/0499; G06N 3/084;
H02P 29/64; H02P 29/662

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 US 202363586694 P
02.05.2024 US 202418652869

(71) Applicant: Deere & Company
Moline, IL 61265 (US)

(72) Inventors:
• WU, Yujiang
Fargo, 58102 (US)
• LINGLE, Joseph F.
Moline, 61265 (US)
• REEK, Christopher
Fargo, 58102 (US)
• DECOCK, Jacob R.
Fargo, 58102 (US)
• HAICH, Abram
Fargo, 58102 (US)

(74) Representative: Reddie & Grose LLP
The White Chapel Building
10 Whitechapel High Street
London E1 8QS (GB)

(54) **METHOD AND SYSTEM FOR ESTIMATING WINDING TEMPERATURE FOR CONTROLLING AN ELECTRIC MACHINE**

(57) In accordance with a trained deep learning model, the data processing system is configured to estimate a temperature of the stator windings of the electric machine based on the following input data: observed current into direct-axis current, observed quadrature-axis current, observed or estimated direct-axis voltage, observed or estimated quadrature-axis voltage, observed direct-current bus voltage, estimated torque of the rotor of the electric machine, estimated speed of the rotor of the electric machine, sensed coolant inlet temperature, and sensed coolant flow rate, wherein the trained deep learning model is trained in accordance with a truncated back propagation through time technique.

FIG. 1

EP 4 531 272 A1

**Description**

**Related Application**

This document (including the drawings) claims priority and the benefit of the filing date based on U.S. provisional application number 63/586,694, filed September 29, 2023, under 35 U.S.C. § 119(e), where the provisional application is hereby incorporated by reference herein.

**Field**

This disclosure relates to a method and system for estimating winding temperature for controlling an electric machine.

**Background of the Invention**

An electric machine may feature a rotor with permanent magnets and a stator, such as an interior permanent magnet (IPM) motor or IPM synchronous motor. An interior permanent magnet (IPM) motor or IPM synchronous machine may have varying magnetic field strength because of a temperature change in the magnets associated with the rotor. In turn, if the magnetic field strength decreases, the output torque and operating efficiency of the motor tends to decrease. Certain motors or electric machines have no direct temperature sensors that measure the temperature of the magnets on the rotor, as opposed to the stator housing or the stator windings. To avoid damage to the motor or electric machine, a controller may derate temporarily the control signals to the electric machine to afford an opportunity for the electric machine to dissipate thermal energy sufficient to operate again and to recover with full magnetic field strength. Thus, there is a need for an improved method and system for estimating (stator) winding temperature to control an electrical motor with temperature compensation.

**Summary of the Invention**

In accordance with one aspect of the disclosure, a method and system for estimating a winding temperature of an electric machine comprises a data processing system with one or more sensors that are configured to measure observed current for a corresponding time interval. Further, the data processing system or transform module is configured to convert or transform the observed current into direct-axis current and observed quadrature axis current for the corresponding time interval for the corresponding time interval. A voltage sensor or the data processing system is configured to measure a voltage of the direct-current voltage bus for the corresponding time interval. An motion estimator is configured to estimate a speed, torque, or both, of the rotor of the electric machine based on the direct-axis current and quadrature-axis current (or based on the direct-axis voltage and the quadrature-axis voltage) for the corresponding time interval. One or more coolant sensors are configured to sense an coolant (e.g., oil) inlet temperature to the electric machine or stator windings for the corresponding time interval and to sense a flow rate of the coolant to the electric machine for the corresponding time interval. In accordance with a trained deep learning model, the data processing system is configured to estimate a temperature of the stator windings of the electric machine based on the following input data: observed current into direct-axis current, observed quadrature-axis current, observed or estimated direct-axis voltage, observed or estimated quadrature-axis voltage, observed direct-current bus voltage, estimated torque of the rotor of the electric machine, estimated speed of the rotor of the electric machine, sensed coolant inlet temperature, and sensed coolant flow rate, wherein the trained deep learning model is trained in accordance with a truncated back propagation through time technique.

In accordance with another aspect of the disclosure, the method and system for estimating a winding temperature to an electric machine comprises a temperature estimation module. A temperature estimation module estimates a (stator) winding temperature associated with the electric machine. The current adjustment module or the data processing system adjusts a command (e.g., quadrature-axis current command or the quadrature-axis current) for the motor to compensate for shaft torque variation associated with the estimated temperature or change the estimated temperature.

**Brief Description of the Drawings**

FIG. 1 is a block diagram of one embodiment of a system for estimating winding temperature for controlling an electric machine with temperature compensation.

FIG. 2 is a block diagram of an electronic data processing system consistent with FIG. 1.

FIG. 3 is a chart that illustrates input data or input variables and output to a winding temperature estimator or winding temperature estimation module.

FIG. 4 is a block diagram of one embodiment of a moving average module that is configured to receive input variables, integrate the input variables, and determine a moving average of aggregate or integrated input variables.

FIG. 5 is a block diagram of another embodiment of a moving average module that is configured to receive input variables, integrate the input variables, and determine a moving average of aggregate or integrated input variables.

FIG. 6 is a block diagram of yet another embodiment of a moving average module that is configured to receive input variables, integrate the input variables, and determine a moving average of aggregate or integrated input variables.

FIG. 7 is a block diagram of one embodiment of the the winding temperature estimation module.

FIG. 8 is a flow chart of a first embodiment of a method for estimating a winding temperature for controlling an electrical machine (e.g., an electric motor with temperature compensation).

FIG. 9 is a flow chart of a second embodiment of a method for estimating a winding temperature for controlling an electrical machine (e.g., an electric motor with temperature compensation).

**Description of the Preferred Embodiment**

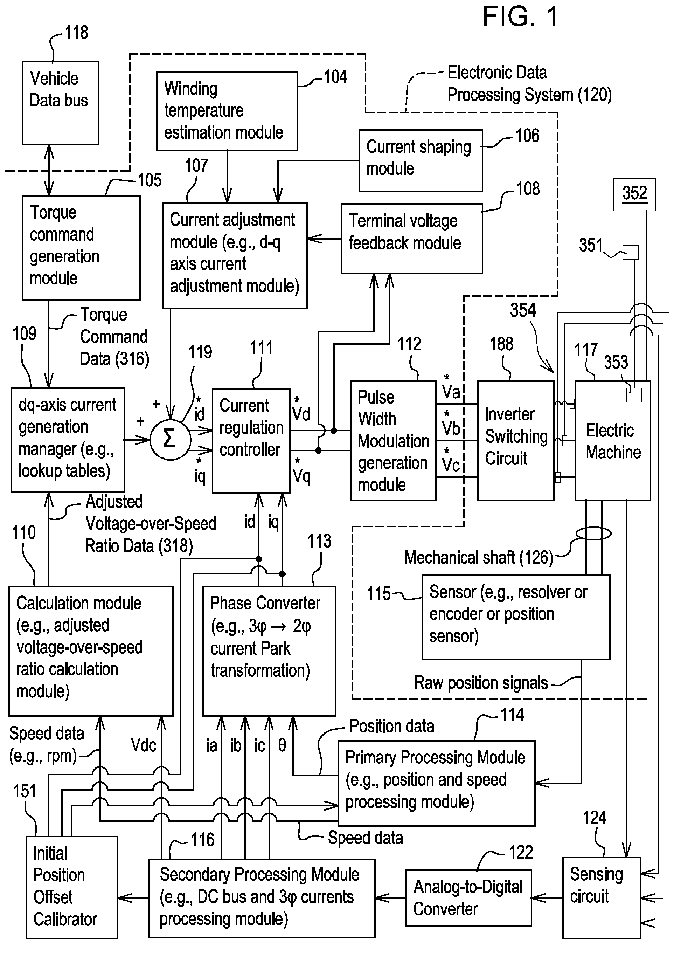

In accordance with one embodiment, FIG. 1 discloses system for controlling an electric machine 117 (e.g., an interior permanent magnet (IPM) motor) or another alternating current machine. In one embodiment, the system, aside from the electric machine 117, may be referred to as an inverter or a motor controller. As used herein, the term electric machine shall be regarded as synonymous with any of the following: a motor, an electric motor, IPM motor, an AC motor, a generator, and/or alternator.

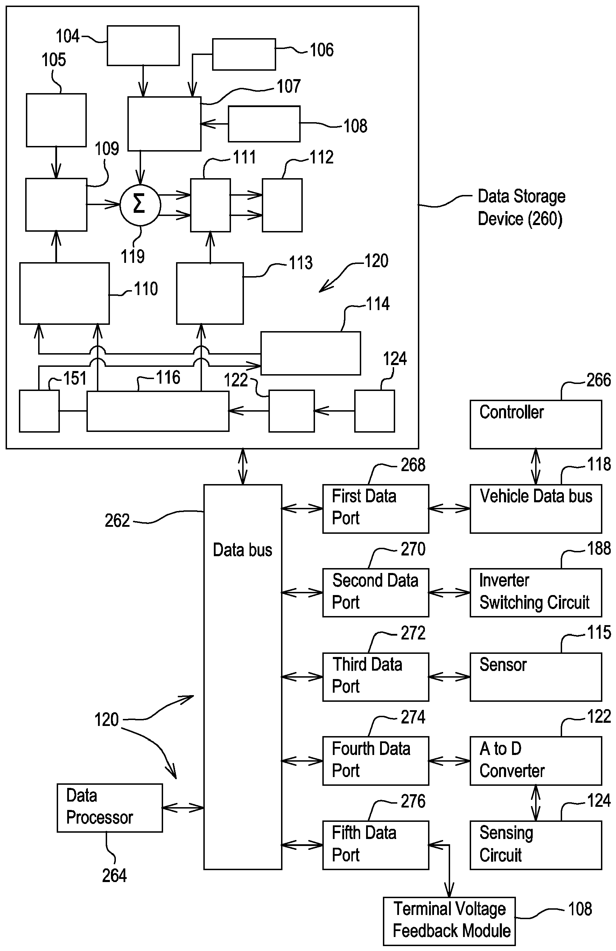

The system comprises electronic modules, software modules, or both. In one embodiment, the motor controller comprises an electronic data processing system 120 to support storing, processing or execution of software instructions of one or more software modules. The electronic data processing system 120 is indicated by the dashed lines in FIG. 1 and is shown in greater detail in FIG. 2.

The electronic data processing system 120 is coupled to an inverter circuit 188. The inverter circuit 188 comprises a semiconductor drive circuit that drives or controls switching semiconductors (e.g., insulated gate bipolar transistors (IGBT) or other power transistors) to output control signals for the electric machine 117. In turn, the inverter circuit 188 is coupled to the electric machine 117. The electric machine 117 is associated with a sensor 115 (e.g., a position sensor, a resolver or encoder position sensor) that is associated with the motor shaft 126 or the rotor. The sensor 115 and the electric machine 117 are coupled to the electronic data processing system 120 to provide feedback data (e.g., current feedback data, such as $i_a$, $i_b$, $i_c$), raw position signals, among other possible feedback data or signals, for example. Other possible feedback data includes, but is not limited to, winding temperature readings, semiconductor temperature readings of the inverter circuit 188, three phase voltage data, or other thermal or performance information for the electric machine 117.

In one embodiment, the torque command generation module 105 is coupled to a d-q axis current generation manager 109 (e.g., d-q axis current generation look-up tables). D-q axis current refers to the direct axis current and the quadrature axis current as applicable in the context of vector-controlled alternating current machines, such as the electric machine 117. The output of the d-q axis current generation manager 109 and the output of a current adjustment module 107 (e.g., d-q axis current adjustment module 107) are fed to a summer 119. In turn, one or more outputs (e.g., direct axis current data ($i_d$*) and quadrature axis current data ($i_q$*)) of the summer 119 are provided or coupled to a current regulation controller 111.

The current regulation controller 111 is capable of communicating with the pulse-width modulation (PWM) generation module 112 (e.g., space vector PWM generation module). The current regulation controller 111 receives respective d-q axis current commands (e.g., $i_d$* and $i_q$*) and actual d-q axis currents (e.g., $i_d$ and $i_q$) and outputs corresponding d-q axis voltage commands (e.g., $v_d$* and $v_q$* commands) for input to the PWM generation module 112.

In one embodiment, the PWM generation module 112 converts the direct axis voltage and quadrature axis voltage data from two phase data representations into three phase representations (e.g., three phase voltage representations, such as $v_a$*, $v_b$* and $v_c$*) for control of the electric machine 117, for example. Outputs of the PWM generation module 112 are coupled to the inverter 188.

The inverter circuit 188 comprises power electronics, such as switching semiconductors to generate, modify and control pulse-width modulated signals or other alternating current signals (e.g., pulse, square wave, sinusoidal, or other waveforms) applied to the electric machine 117. The PWM generation module 112 provides inputs to a driver stage within the inverter circuit 188. An output stage of the inverter circuit 188 provides a pulse-width modulated voltage waveform, or other voltage signal for control of the motor. In one embodiment, the inverter 188 is powered by a direct current (DC) voltage bus.

The electric machine 117 is associated with a sensor 115 (e.g., a resolver, encoder, speed sensor, or another position sensor or speed sensors) that estimates at least one of an angular position of the motor shaft 126, a speed or velocity of the motor shaft 126, and a direction of rotation of the motor shaft 126. The sensor 115 may be mounted on or integral with the motor shaft 126. The output of the sensor 115 is capable of communication with the primary processing module 114 (e.g., position and speed processing module). In one embodiment, the sensor 115 may be coupled to an analog-to-digital converter (not shown) that converts analog position data or velocity data to digital position or velocity data, respectively. In other embodiments, the sensor 115 (e.g., digital position encoder) may provide a digital data output of position data or velocity data for the motor shaft 126 or rotor.

A first output (e.g., position data and speed data for the electric machine 117) of the primary processing module 114 is communicated to the phase converter 113 (e.g., three-phase to two-phase current Park transformation module) that converts respective three-phase digital representations of measured current into corresponding two-phase digital representations of measured current. A second output (e.g., speed data) of the primary processing module 114 is communicated to the calculation module 110 (e.g., adjusted voltage over speed ratio module).

An input of a sensing circuit 124 may comprise one or more current sensors, one or more voltage sensors, or both. The sensing circuit 125 is coupled to alternating current (AC) terminals of the electric machine 117 for sensing at least the measured three-phase currents and a voltage level of the direct current (DC) bus (e.g., high voltage DC bus which may provide DC power to the inverter circuit 188). An output of the sensing circuit 124 is coupled to an analog-to-digital converter 122 for digitizing the output of the sensing circuit 124. In turn, the digital output of the analog-to-digital converter 122 is coupled to the secondary processing module 116 (e.g., Direct current (DC) bus and three phase current processing module). For example, the sensing circuit 124 is associated with the electric machine 117 for measuring three phase currents (e.g., current applied to the windings of the electric machine 117, back EMF induced into the windings, or both).

In one embodiments the electric machine 117 may feature a heat-exchanger cooling system that circulates a heated coolant to a heat exchanger (e.g., radiator) spaced apart from the electric machine 117 to reduce the thermal energy in the heated coolant. For example, if the electric machine 117 is cooled, partially or entirely, by a coolant (e.g., oil, lubricant or fluid) that is circulated through passageways or fluidic paths within the electric machine 117, the electric machine 117 may be accompanied by a heat exchanger 352 (e.g., radiator) and a pump 351 (e.g., electric pump) to circuit the coolant (e.g., oil) through the electric machine 117 and the heat exchanger 352. Further, a coolant sensor 353 may comprise a coolant temperature sensor (e.g., inlet coolant temperature sensor), a coolant flow rate sensor, or both, where the coolant sensor 353 has a physical or virtual communication path to an winding temperature estimation module 104. In practice, the coolant sensor 353 may represent any sensor 115 that is coupled to a data port 272 to support communication with the electronic data processor 264 and the (software) modules within the data storage device 260.

In an alternate embodiment, the electric machine 117 is cooled by passive air-cooling (e.g., fins or protrusions on the (exterior) housing of the electric machine 117) or by active air-cooling, such as an electric fan with one or more blades that directs ambient air or circulates air in, near or around the housing of the electric machine 117. In another alternate embodiment, both an air-cooling system and a heat-exchanger cooling system can be used simultaneously to cool the electric machine 117.

Certain outputs of primary processing module 114 and the secondary processing module 116 feed the phase converter 113. For example, the phase converter 113 may apply a Park transformation or other conversion equations (e.g., certain conversion equations that are suitable are known to those of ordinary skill in the art) to convert the measured three-phase representations of current into two-phase representations of current based on the digital three-phase current data from the secondary processing module 116 and position data from the sensor 115. The output of the phase converter 113 module is coupled to the current regulation controller 111.

Other outputs of the primary processing module 114 and the secondary processing module 116 may be coupled to inputs of the calculation module 110 (e.g., adjusted voltage over-speed ratio calculation module). For example, the primary processing module 114 may provide speed data (e.g., motor shaft 126 revolutions per minute), whereas the secondary processing module 116 may provide a measured level of direct current voltage (e.g., on the direct current (DC) bus of a vehicle). The direct current voltage level on the DC bus that supplies the inverter circuit 188 with electrical energy may fluctuate or vary because of various factors, including, but not limited to, ambient temperature, battery condition, battery charge state, battery resistance or reactance, fuel cell state (if applicable), motor load conditions, respective motor torque and corresponding operational speed, and vehicle electrical loads (e.g., electrically driven air-conditioning compressor). The calculation module 110 is connected as an intermediary between the secondary processing module 116 and the d-q-axis current generation manager 109. The output (e.g., adjusted voltage-over-speed ration data, 318) of the calculation module 110 can adjust or impact current commands generated by the d-q axis current generation manager 109 to compensate for fluctuation or variation in direct current bus voltage, among other things.

The winding temperature estimation module 104, the current shaping module 106, and the terminal voltage feedback module 108 are coupled to or are capable of communicating with the dq-axis current adjustment module 107. In turn, the d-q axis current module 107 may communicate with the dq-axis current generation manager or the summer 119.

The winding temperature module 104 estimates or determines the temperature of the winding or stator winding of the electric machine (e.g., electric motor) rotor permanent magnet or magnets. The estimated winding temperature may be used as input to the current adjustment module 107 to adjust the direct-axis current, the quadrature-axis current or both in response to the then-current estimated winding temperature or change in winding temperature during one or more time intervals (e.g., sampling time intervals). Further, in one embodiment, the winding temperature estimation module 104 may estimate the temperature of the rotor magnets (e.g., rotor permanent magnets or magnets) from internal control variables calculation, one or more sensors located on the stator, in thermal communication with the stator, or secured to the housing of the electric machine 117. For example, the winding temperature module 104 can estimate or facilitate the determination of the temperature of the winding or rotor; hence, determine a compensating current adjustment based on the estimated winding temperature or estimating rotor magnet temperature by observing or estimating a change in magnetic field strength or available torque of the electric machine 117 at an ambient or a reference temperature versus an actual elevated operating temperature of one or more stator windings, rotor magnets, or both.

In one alternate embodiment, the winding temperature estimation module 104 may be replaced by or may estimate the temperature of one or more windings (e.g., stator winding) from one or more sensors located on the stator, a ferrite or ferrous core of the stator, in thermal communication with the stator, or secured to the housing of the electric machine 117.

In another alternative embodiment, the winding temperature estimation module 104 may be replaced with a temperature detector (e.g., a thermistor or infrared thermal sensor coupled to wireless transmitter) mounted on one or more windings (e.g., stator windings), the rotor or the magnet, where the detector provides a signal (e.g., wireless signal) indicative of the temperature of one or more windings, one or more magnets, or both.

In one embodiment, the method or system may operate in the following manner. The torque command generation module 105 receives an input control data message, such as a speed control data message, a voltage control data message, or a torque control data message, over a vehicle data bus 118. The torque command generation module 105 converts the received input control message into torque control command data 316.

The d-q axis current generation manager 109 selects or determines the direct axis current command data and the quadrature axis current command data associated with respective torque control command data and respective detected motor shaft 126 speed data. For example, the d-q axis current generation manager 109 selects or determines the direct axis current command, the quadrature axis current command by accessing one or more of the following: (1) a look-up table, database or other data structure that relates respective torque commands to corresponding direct and quadrature axes currents, (2) a set of quadratic equations or linear equations that relate respective torque commands to corresponding direct and quadrature axes currents, or (3) a set of rules (e.g., if-then rules) that relates respective torque commands to corresponding direct and quadrature axes currents. The sensor 115 on the electric machine 117 facilitates provision of the detected speed data for the motor shaft 126, where the primary processing module 114 may convert position data provided by the sensor 115 into speed data.

The current adjustment module 107 (e.g., d-q axis current adjustment module) provides current adjustment data to adjust the direct axis current command data and the quadrature axis current command data based on input data from the winding temperature estimation module 104 and the current shaping module 106 and terminal voltage feedback module 108.

The current shaping module 106 may determine a correction or preliminary adjustment of the quadrature axis (q-axis) current command and the direct axis (d-axis) current command based on one or more of the following factors: torque load on the electric machine 117 and speed of the electric machine 117, for example. The winding temperature estimation module 104 may generate a secondary adjustment of the q-axis current command and the d-axis current command based on any of the following: (a) an estimated winding temperature of one or more stator windings, (b) an estimated change in winding temperature, (c) an estimated change in magnetic field strength of the rotor magnets with respect to a corresponding estimated winding temperature, or corresponding rotor temperature, (d) a characterized change (e.g., reduction) in magnetic field strength at a known ambient temperature under known operational conditions with elevated winding temperature or a range of elevated winding temperatures, for example.

The terminal voltage feedback module 108 may provide a third adjustment to the d-axis current command and q-axis current command based on a controller voltage command versus a voltage limit. The current adjustment module 107 may provide an aggregate current adjustment that considers the preliminary adjustment, one of the secondary adjustment and the third adjustment.

In one embodiment, the electric machine 117 may comprise an interior permanent magnet (IPM) machine or a synchronous IPM machine (IPMSM). An IPMSM has many favorable advantages compared with conventional induction machines or surface mounted PM machines (SMPM) such as high efficiency, high power density, wide constant power operating region, maintenance free, for instance.

If the electric machine 117 comprises an IPMSM, the output torque consists of two components, magnetic torque and reluctance torque, as follows:

$$T_{shaft} = T_{mag} + T_{rel} = \frac{3}{2} pp \cdot \lambda_f \cdot i_q + \frac{3}{2} pp \cdot (L_d - L_q) \cdot i_d \cdot i_q \qquad (1)$$

In Equation 1, $T_{shaft}$ is the total torque of the motor, $T_{mag}$ is the magnetic torque component, $T_{rel}$ is the reluctance torque component, $pp$ is the number of pole pairs of the motor or machine, $\lambda_f$ is the maximum flux linkage per phase, $i_d$ is the direct axis current, $i_q$ is the quadrature axis current, $L_d$ is the direct axis inductance, and $L_q$ is the quadrature axis inductance.

In Equation 1, the maximum flux linkage per phase ($\lambda_f$) can be determined by magnet strength and magnetic saturation level. $L_d$ and $L_q$ are machine d-q axis inductances, which vary depending on magnetic saturation level. For the purpose of simplicity, the following assumptions apply to Equation 1:

1. $\lambda_f$ is directly proportional to magnet strength, as is the magnetic torque component $T_{mag}$;
2. $L_d$ and $L_q$ are functions of $i_d$ and $i_q$ only, although $\lambda_f$ change has slight impact on $L_d$ and $L_q$, where $L_d$ and $L_q$ can be derived from finite element analysis based simulations; and
3. ($L_d$-$L_q$) has negligible change when the d-q axis current ($i_d$,$i_q$) varies slightly, and the reluctance torque component $T_{rel}$ has a negligible change with the d-q axis current varies slightly.

Without adjusting current commands ($i_d$,$i_q$), magnet strength fluctuation due to magnet temperature change would cause a corresponding percentage change in the magnetic torque component $T_{mag}$. However, the net percentage change in the total output torque still depends on the weighting of each torque component, which varies with respect to operating conditions.

In steady-state operation of an IMPSM (e.g., electric machine 117), the output of the current regulation controller 111 provides d-q axis terminal voltages can be expressed as follows:

$$v_d = r_s \cdot i_d - \omega_e \cdot L_q \cdot i_q \tag{2}$$

$$v_q = r_s \cdot i_q + \omega_e \cdot L_d \cdot i_d + \omega_e \cdot \lambda_f \tag{3}$$

In Equations 2 and 3, $v_d$ is the direct axis voltage or command, $v_q$ is the quadrature axis voltage or command, $r_s$ is the stator resistance of the motor or machine, $i_d$ is the direct axis current, $i_q$ is the quadrature axis current, $\omega_e$ is the rotational electrical speed of the rotor with respect to the stator, $\lambda_f$ is the maximum flux linkage per phase, $L_d$ is the direct axis inductance.

In Equations 2 and 3, if neglecting stator resistance ($r_s$) change with respect to stator winding temperature and assuming $L_d$ and $L_q$ are functions of d-q axis current ($i_d$,$i_q$) only, the magnet temperature change that causes flux linkage ($\lambda_f$) fluctuation has no effect on d-axis terminal voltage command $v_d$. The rotational electrical speed ($\omega_e$) of the rotor may be proportional to the rotational mechanical speed of the rotor, for example. However, q-axis terminal voltage command $v_q$ will vary accordingly to accommodate $\lambda_f$ fluctuation.

The sensor 115 (e.g., shaft or rotor speed detector) may comprise one or more of the following: a direct current motor, an optical encoder, a magnetic field sensor (e.g., Hall Effect sensor), magneto-resistive sensor, and a resolver (e.g., a brushless resolver). In one configuration, the sensor 115 comprises a position sensor, where position data and associated time data are processed to determine speed or velocity data for the motor shaft 126. In another configuration, the sensor 115 comprises a speed sensor, or the combination of a speed sensor and an integrator to determine the position of the motor shaft.

In yet another configuration, the sensor 115 comprises an auxiliary, compact direct current generator that is coupled mechanically to the motor shaft 126 of the electric machine 117 to determine speed of the motor shaft 126, where the direct current generator produces an output voltage proportional to the rotational speed of the motor shaft 126. In still another configuration, the sensor 115 comprises an optical encoder with an optical source that transmits a signal toward a rotating object coupled to the shaft 126 and receives a reflected or diffracted signal at an optical detector, where the frequency of received signal pulses (e.g., square waves) may be proportional to a speed of the motor shaft 126. In an additional configuration, the sensor 115 comprises a resolver with a first winding and a second winding, where the first winding is fed with an alternating current, where the voltage induced in the second winding varies with the frequency of rotation of the rotor.

In FIG. 2, the electronic data processing system 120 comprises an electronic data processor 264, a data bus 262, a data storage device 260, and one or more data ports (268, 270, 272, 274 and 276). The electronic data processor 264, the data storage device 260 and one or more data ports are coupled to the data bus 262 to support communications of data between or among the electronic data processor 264, the data storage device 260 and one or more data ports.

In one embodiment, the electronic data processor 264 may comprise an electronic data processor, a microprocessor, a microcontroller, a programmable logic array, a logic circuit, an arithmetic logic unit, an application specific integrated circuit, a digital signal processor, a proportional-integral-derivative (PID) controller, or another data processing device.

The data storage device 260 may comprise any magnetic, electronic, or optical device for storing data. For example, the data storage device 260 may comprise an electronic data storage device, an electronic memory, non-volatile electronic random access memory, one or more electronic data registers, data latches, a magnetic disc drive, a hard disc drive, an optical disc drive, or the like.

As shown in FIG. 2, the data ports comprise a first data port 268, a second data port 270, a third data port 272, a fourth data port 274 and a fifth data port 276, although any suitable number of data ports may be used. Each data port may comprise a transceiver and buffer memory, for example. In one embodiment, each data port may comprise any serial or parallel input/output port.

In one embodiment as illustrated in FIG. 2, the first data port 268 is coupled to the vehicle data bus 118. In turn, the vehicle data bus 118 is coupled to the controller 266. In one configuration, the second data port 270 may be coupled to the inverter circuit 188; the third data port 272 may be coupled to the sensor 115; the fourth data port 274 may be coupled to the analog-to-digital converter 122; and the fifth data port 276 may be coupled to the terminal voltage feedback module 108. The analog-to-digital converter 122 is coupled to the sensing circuit 124.

In one embodiment of the electronic data processing system 120, the torque command generation module 105 is associated with or supported by the first data port 268 of the electronic data processing system 120. The first data port 268 may be coupled to a vehicle data bus 118, such as a controller area network (CAN) data bus. The vehicle data bus 118 may provide data bus messages with torque commands to the torque command generation module 105 via the first data port 268. The operator of a vehicle may generate the torque commands via a user interface, such as a throttle, a pedal, a controller 266, or other control device.

In certain embodiments, the sensor 115 and the primary processing module 114 may be associated with or supported by a third data port 272 of the electronic data processing system 120.

In one embodiment, where an electrical machine (e.g., 117) comprises a rotor with associated magnets and a stator, a system for controlling the electric machine (e.g., 117) comprises an electronic data processor 264 for estimating a change in temperature of the magnets associated with the rotor of the electric machine (e.g., 117) based on an operational magnetic flux strength that is compared to a reference magnetic flux strength determined at a known ambient temperature and for a predetermined operating range of the motor. A temperature estimation module 104 is adapted to estimate the winding temperature of one or more windings or the estimated change in the winding temperature over time (e.g., one or more successive time intervals) in accordance with a deep learning model, such as a trained deep learning model that is trained in accordance with a truncated back propagation through time technique.

The deep learning model may comprise a neural network 710, such as a minimum of a two layer deep neural network 710, such as stateful long short-term memory (LSTM) with truncated back propagation through time (TBTT) to predict or to estimate winding temperature of an electric machine, or other estimated temperatures over a long sequency time series prediction. The truncated-back-propagation-through-time approach (TBPTT) means that the neural network 710 comprises a recurrent neural network 710 where one or more output nodes can provide intermediate output state data or final output state data to one or more input nodes, such that the neural network 710 has internal states or memory. The stateful LSTM does not reset any states or memory between batches and the batch size must be specified before training. The stateful LSTM tends to outperform stateless (i.e., nonrecurrent neural network 710 without memory) LSTM if the TBPTT is less than the batch size. For example, if the batch size is 128 bits, than the stateful LSTM outperforms stateless if the TBPTT is equal to or less than 64 bits, such as 64 bits, 32 bits or 16 bits.

In certain configurations, in a pre-processing module 702 702 prior to input variables 302 (e.g., input data, such as electric machine data) to the neural network 710, the TBTT is a configurable parameter that can be used to train the deep learning model, where the above electric machine variables or other input data into the model can be sliced or cut into shorter sequence lengths (e.g., batch sizes of bits or bytes or words) prior to training the model of the neural network 710 or prior to operating the trained model in the operational mode.

In the pre-processing module 702 prior to application to the neural network 710 (e.g., training of the neural network 710), LSTM data may be normalized, such as normalization based on the Z-scale normalization. However, during the estimation or prediction of winding temperature after application to the neural network 710, the inverse transform is applied.

In one example, the training or operation of the neural network 710 or a long sequence time series prediction may require samples of at least the following input variables 302 (e.g., electric machine variables) that are available over a time period from approximately one to approximately 6 hours: (a) d-axis voltage, $V_d$, (b) q-axis voltage, $V_q$, (c) coolant temperature (e.g., for the electric machine), (d) rotor speed (e.g., in the motoring mode), (e) d-axis current, $i_d$, (f) q-axis current, $i_q$, and, (g) ambient temperature of the environment around the electric machine.

By limiting the input variables 302 (e.g., electric machine variables) the electronic data processor requires less electronic memory and electronic data processing resources, which support the use of the neural network 710 in embedded electronic devices for off-road vehicles or other vehicles during an operational mode.

In an alternate embodiment, that electronic data processor may be configured to down sample the above electric machine samples to limit a sequence length of samples; hence, reduce the electronic data processing resources, such as throughput capacity and electronic data storage resources. For example, in an extended sequence processing mode, the electronic data processor may be configured to limit dynamically and temporarily a sequence length of samples by down sampling to reduce the resolution of the sequence of samples, while affording a lower resolution of samples for an extended sequence length that would not otherwise be practical to process with the given data processing throughput and electronic memory resources. A decimator may take digital samples at a greater interval if down sampling is active, for example. Separately, the electronic data processor may increase the sampling rate or conduct oversampling of samples of the above electric machine variables if the electric machine is operating with a temperature range that exceeds a threshold (e.g., cautionary threshold prior to derating threshold, where the electric machine is derated in power). Oversampling typically means that the bit rate of sampling of the sampled data is increased by adding interpolated data.

In one embodiment, a temperature estimation module 104 comprises software instructions (e.g., stored in the data storage device 260 in permanent or non-transitory form) for the electronic data processor 264 to establish a relationship between the estimated change in the temperature and a magnetic torque component of a target output torque of the motor consistent with the predetermined operating range. A current adjustment module 107 is adapted to adjust a command for the motor to compensate for shaft torque variation associated with the estimated change in the temperature in conformance with the established relationship. For example, in one configuration the current adjustment module 107 comprises software instructions (e.g., stored in the data storage device 260 in permanent or non-transitory form) for the electronic data processor 264 to compensate for shaft torque variation associated with the estimated change in the temperature in conformance with the established relationship.

In one embodiment, the electronic data processor 264 is arranged to derive the operational magnetic flux strength from an operational quadrature-axis voltage command and wherein the electronic data processor 264 is arranged to derive the reference magnetic flex strength from a reference quadrature-axis voltage command. The electronic data processor 264 is adapted to execute software instructions of the temperature estimation module 104 in accordance with trained a deep learning model to estimate the winding temperature rapidly and efficiently.

The current adjustment module 107 or the electronic data processor 264 may generate the command in accordance with various examples, which may be applied alternately or cumulatively. Under a first example, the command comprises a quadrature-axis current command. Under a second example, the command comprises a respective increase in a quadrature-axis current command in response to a corresponding increase in the temperature (e.g., winding temperature, or winding temperature of one or more stator windings). Under a third example, the command comprises an adjustment to a quadrature-axis current command based on the estimated change in the temperature (e.g., winding temperature, or winding temperature of one or more stator windings) and a magnetic torque component (e.g., associated with magnetic fields produced by or resulting from the interaction magnets of the rotor in conjunction with the stator windings) of the target output torque.

In general, the electronic data processor 264 may execute, determine, calculate or solve any equations or mathematical expressions set forth in this document, or variations thereof that fall within the scope of the claims, in furtherance of providing the command or other compensation for temperature change or magnetic flux strength change in the rotor magnets.

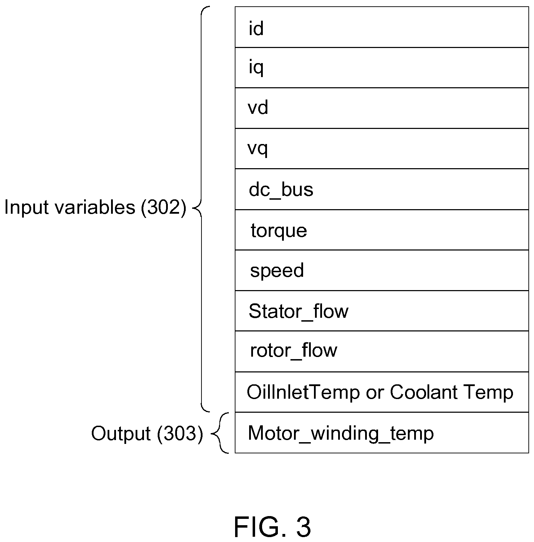

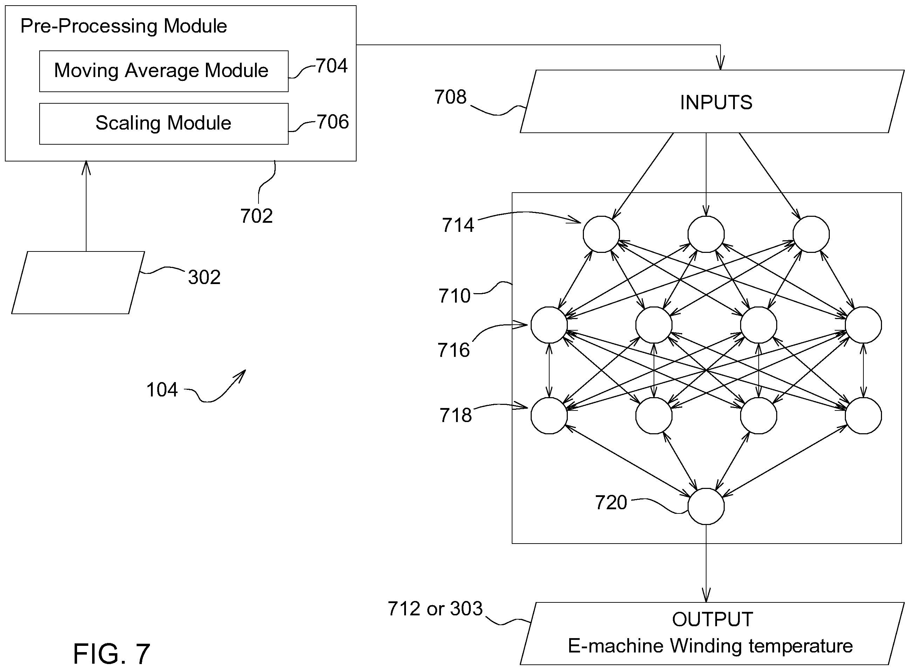

FIG. 3 is a chart that illustrates input data or input variables 302 and output to a winding temperature estimator or winding temperature estimation module 104. In one embodiment, the winding temperature estimation module 104 is illustrated in the block diagram of FIG. 7. The winding temperature estimation module 104 , or its neural network 710 outputs a winding temperature 303 of the electric machine 117. The neural network 710 may be trained in accordance with various examples, which may be applied separately or cumulatively.

Under a first example, the training or operation of the neural network 710 or a long sequence time series prediction may require samples of at least the following input variables 302 (e.g., electric machine variables) that are available over a time period from approximately one (1) to approximately six (6) hours: (a) an observed d-axis voltage, $V_d$, at the terminals of the electric machine 117, (b) observed q-axis voltage, $V_q$ at the terminals of the electric machine 117, (c) observed temperature (e.g., for coolant of the electric machine, winding, housing portion, radiator, tubing or inlet), (d) observed rotor speed (e.g., in the motoring mode) of the electric machine 117, (e) observed d-axis current, $i_d$, at one or more terminals of the electric machine 117, (f) observed q-axis current, $i_q$, at one or more terminals of the electric machine 117, and, (g) observed ambient temperature of the environment around the electric machine 117.

Under a second example, the training or operation of the neural network 710 or a long sequence time series prediction may require samples of at least the following input variables 302 (e.g., electric machine variables) that are available over a time period from approximately one (1) to approximately six (6) hours: (a) observed d-axis voltage, $V_d$, at the terminals of the electric machine 117, (b) observed q-axis voltage, $V_q$, at the terminals of the electric machine 117, (c) observed coolant temperature or oil/lubricant inlet temperature (e.g., for the electric machine 117), (d) observed rotor speed (e.g., in the motoring mode) of the electric machine 117, (e) observed d-axis current, $i_d$, at one or more terminals of the electric machine 117, (f) observed q-axis current, $i_q$, at one or more terminals of the electric machine 117, (g) observed ambient temperature of the environment around the electric machine 117, (h) observed rotor torque of the electric machine 117, (i) observed stator flow (e.g., expressed in liters or gallons per unit time) of coolant (e.g., oil or lubricant) in or on the electric machine 117, and (j) observed rotor flow of coolant (e.g., oil or lubricant) in or on the electric machine 117 (e.g., expressed in liters or gallons per unit time).

Under a third example, the training or operation of the neural network 710 or a long sequence time series prediction may require samples of at least the following input variables 302 (e.g., electric machine variables) that are available over a time period from approximately one (1) to approximately six (6) hours: (a) an observed d-axis voltage, $V_d$, at the terminals of the electric machine 117, (b) q-axis voltage, $V_q$, at the terminals of the electric machine, (c) coolant temperature or oil/lubricant inlet temperature (e.g., for the electric machine 117), (d) rotor speed (e.g., in the motoring mode) of the electric machine 117, (e) d-axis current, $i_d$, (f) q-axis current, $i_q$, of one or more terminals of the electric machine 117, (g) ambient temperature of the environment around the electric machine 117, (h) rotor torque of the electric machine 117, (i) stator flow of coolant (e.g., oil or lubricant) in or on the electric machine 117, (j) rotor flow of coolant (e.g., oil or lubricant) in or on the electric machine 117 and (k) direct-current (DC) bus voltage that provides power or electrical energy to the inverter switching circuit 188 that is coupled to the electric machine 117. As used herein, approximately means a tolerance of plus or minus ten percent of any variable, data, measurement or parameter, unless otherwise explicitly defined.

By limiting the input variables 302 (e.g., electric machine variables) the electronic data processor requires less electronic memory and electronic data processing resources, which support the use of the neural network 710 in embedded electronic devices for off-road vehicles or other vehicles during an operational mode.

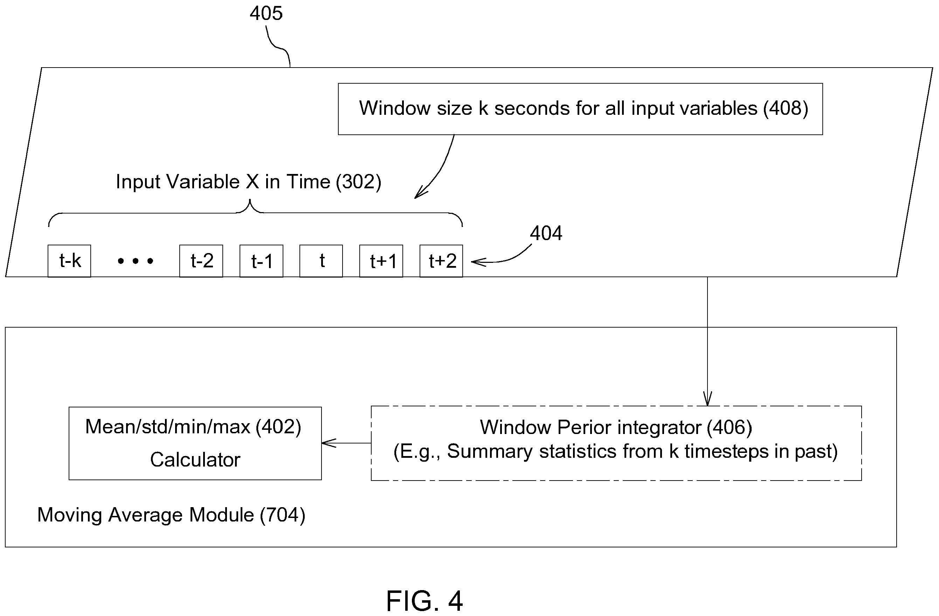

FIG. 4 is a block diagram of one embodiment of a moving average module 704 that is configured to: (a) to integrate or filter, by a window period integrator 406, the input variables 302 to filter or smooth the input variables 302 over an sampling interval or over a series of sampling intervals; (b) receive, by statistics calculator 402, a set of input variables 302 (e.g., x) with respect to one or more time windows 404 (e.g., sampling intervals); and (c) to determine, by a moving average module 704, a moving average of aggregate or integrated input variables (e.g., one or more exponentially weighted moving averages for each corresponding input variable 302).

In one embodiment, the statistics calculator 402 is configured to determine or estimate mean (e.g., geometric mean or average), standard deviation, minimum and maximum of each input variable 302 for each respective sampling interval or time window 404 of a multiple sampling intervals. The set of input variables 302 (e.g., x) over time from the sequence of time windows 404 can be defined as a comprehensive sequential input data set 405. As illustrated in FIG. 4, each time window for an input variable 302 has a corresponding window duration 408 or a corresponding window size of k in units of time (e.g., expressed in seconds, or portions of seconds, or expressed in equivalent batch size of number of bits or bytes over a units of time). In one illustrative example, the time windows for respective input data 302 are defined as t-k .. t-2, t-1, t where k is positive integer greater than 2, which represents the number of past time stamps, where t is a present time interval (e.g., current epoch), and where t-1, and t-2 ...t-k are historic time intervals (e.g., prior epochs). Each epoch represents a measurement time interval of a sensor (353, 354), alone or together with a sensing circuit 124, that collects the input variable data 302, for example.

In an alternate embodiment, each time window for collection of respective input variable data 302 can be further defined as where t+1 .. t +j are future time intervals, where j is a positive integer greater than 1, where j represents the number of future time stamps or future epochs of input variable data 302.

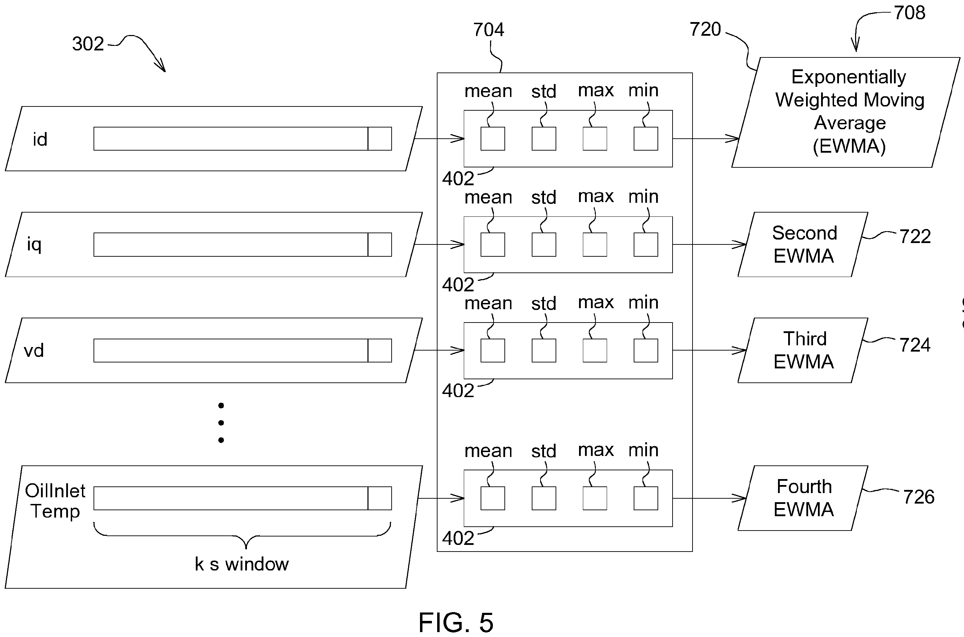

FIG. 5 is a block diagram of another embodiment of a moving average module 704 that is configured to receive input variable data 302, integrate the input variable data, and determine a moving average of aggregate or integrated input variables. One or more sensors 353, 354 are configured to provide the input variable data 302, directly or indirectly to the winding temperature estimation module 104, or its moving average module 704.

The input variable data 302 in inputted to the moving average module 704 or the winding temperature estimation module 104. The input variable data 302 comprises any of the following input data: observed direct-axis current ($i_d$) for one or more respective sampling intervals or time windows, observed quadrature-axis current ($i_q$) for one or more respective sampling intervals or time windows, observed direct-axis voltage ($V_d$) for one or more respective sampling intervals or time windows, observed quadrature-axis voltage ($V_q$) for one or more respective sampling intervals or time windows, and coolant temperature (e.g., oil inlet temperature) for one or more respective sampling intervals or time windows. Each input variable data 302 is provided over a respective series or respective sequence of time windows (e.g., historic time windows k), where each time window may correspond to one or more time slots or sampling time intervals.

The moving average module 704 or a statistics calculator 402 is configured to determine statistics or intermediate statistics for each input variable, such as a mean, standard deviation, maximum value and minimum value for each respective input variable over corresponding time windows, time slots or sampling intervals. For example, the moving average module 704 or statistics calculator 402 is configured to determine a mean, standard deviation, maximum value and minimum value of observed direct-axis current (id) for the respective series or sequence of time windows, time slots or sampling time intervals; the moving average module 704 or statistics calculator 402 is configured to determine a mean, standard deviation, maximum value and minimum value of observed direct-axis current ($i_d$) for the respective series or sequence of time windows, time slots or sampling time intervals; the moving average module 704 or statistics calculator 402 is configured to determine a mean, standard deviation, maximum value and minimum value of observed quadrature-axis current $(i_q)$ for the respective series or sequence of time windows, time slots or sampling time intervals; the moving average module 704 or statistics calculator 403 is configured to determine a mean, standard deviation, maximum value and minimum value of observed direct-axis voltage $(V_d)$ for the respective series or sequence of time windows, time slots or sampling time intervals; the moving average module 704 or statistics calculator 402 is configured to determine a mean, standard deviation, maximum value and minimum value of observed quadrature-axis voltage $(V_q)$ for the respective series or sequence of time windows, time slots or sampling time intervals; the moving average module 704 or statistics calculator 402 is configured to determine a mean, standard deviation, maximum value and minimum value of observed coolant temperature or oil inlet temperature for the respective series or sequence of time windows, time slots or sampling time intervals.

In one embodiment, the moving average module 704 is configured to determine or estimate an exponentially weighted moving average (EWMA) based on the statistics or intermediate statistics for each input variable, such as a mean, standard deviation, maximum value and minimum value for each respective input variable over corresponding time windows, time slots or sampling intervals. For example, the moving average module 704 is configured to determine or estimate: (a) a first exponentially weighted moving average (EWMA) 720 for observed direct-axis current $(i_d)$ over the sequence (e.g., time window) of sampling time intervals, (b) a second exponentially weighted moving average 722 for observed quadrature-axis $(i_q)$ current over the sequence (e.g., time window) of sampling time intervals, (c) a third exponentially weighted moving average 724 for observed direct-axis voltage $(V_d)$ over the sequence (e.g., time window) of sampling time intervals, (d) a fourth exponentially weighted moving average (illustrated by the series of vertical dots) for observed quadrature-axis voltage $(V^q)$ over the sequence (e.g., time window) of sampling time intervals, and (e) an Nth exponentially weighted moving average 726 for observed coolant temperature or inlet oil temperature over the sequence (e.g., time window) of sampling time intervals, where N is any positive integer value greater than or equal to four.

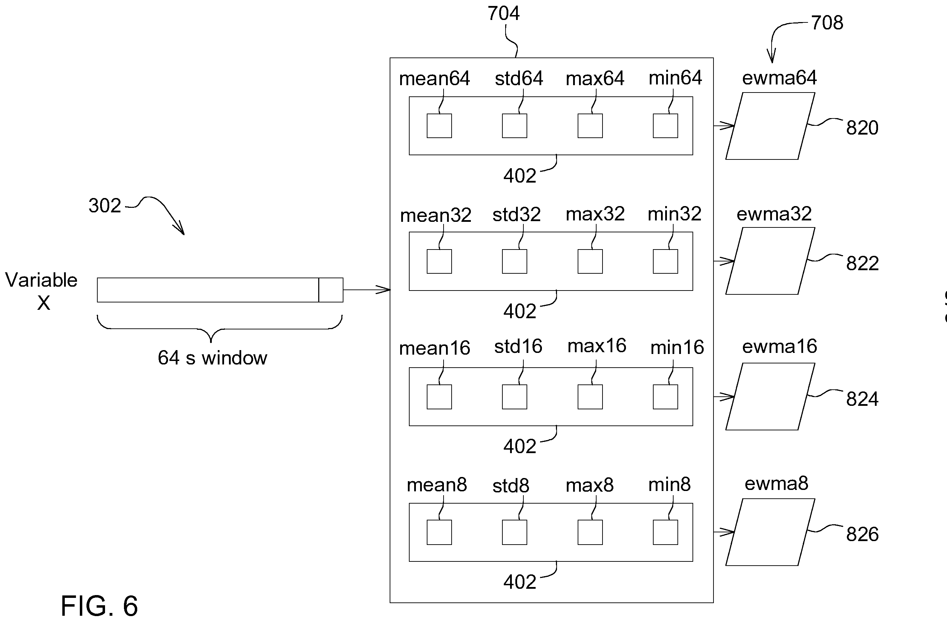

FIG. 6 is a block diagram of yet another embodiment of a moving average module 704 that is configured to receive input variable data 302, integrate the input variable data, and determine a moving average of aggregate or integrated input variables. The block diagram of FIG. 6 is similar to the block diagram of FIG. 5, except that the block diagram of FIG. 6 illustrates the moving average module 704 that determines a set of exponentially weighted moving average for each respective input variable data 302 based upon a different window duration (e.g., batch size), time slot duration, or sampling duration of one or more sampling intervals. Like reference numbers in FIG. 5 and FIG. 6 indicate like features or elements.

In FIG. 5, first, one or more sensors (353, 354) provide each observed input variable data 302 over a maximum time window, a maximum time slot duration or a maximum sampling duration of one or more sampling intervals to the moving average module 704. Second, the moving average module 704 or statistics calculator 402 is configured to determine multiple sets of mean, standard deviation, maximum value and minimum value for each observed input variable data 302, where each of the multiple sets selects a different time window, time slot duration or sampling duration (e.g., of sampling intervals) that is equal to or less than the respective maximum time window, a maximum time slot duration or a maximum sampling duration. For example, the moving average module 704 or one or more statistics calculators 402 are configured to determine a first set of mean, standard deviation, maximum value, and minimum value for observed first input variable data over a first sampling duration that equals the respective maximum sampling duration (e.g., batch size of 64 bits or batch duration of 64 seconds); the moving average module 704 is configured to determine a second set of mean, standard deviation, maximum value and minimum value for observed first input variable data over a second sampling duration (e.g., batch size of 32 bits or batch duration of 32 seconds) that is less than the respective maximum sampling duration; the moving average module 704 or one or more statistics calculators 402 are configured to determine a third set of mean, standard deviation, maximum value and minimum value for observed first input variable data over a third sampling duration (e.g., batch size of 16 bits or batch duration of 16 seconds) that is less than the second sampling duration and the respective maximum sampling duration; the moving average module 704 or one or more statistics calculators 402 are configured to determine a fourth set of mean, standard deviation, maximum value and minimum value for observed first input variable data over a fourth sampling duration (e.g., batch size of 8 or batch duration of 8 seconds) that is less than the third sampling duration the respective maximum sampling duration.

In one embodiment, the moving average module 704 is configured to determine multiple exponentially weighted moving averages for each observed input variable data 302, where each of the exponentially weighted moving averages is associated with a different time window duration, time slot duration or sampling duration (e.g. of multiple sampling intervals) that is equal to or less than the respective maximum time window, a maximum time slot duration or a maximum sampling duration. For example, the moving average module 704 is configured to determine a first exponentially weighted moving average 820 for an observed first input variable over a respective first sampling duration that equals the respective maximum sampling duration (e.g., batch size of 64 bits or batch duration of 64 seconds); the moving average module 704 is configured to determine a second exponentially weighted moving average 822 for the observed first input variable over a respective second sampling duration (e.g., batch size of 32 bits or batch duration of 32 seconds) that is less than the respective maximum sampling duration; the moving average module 704 is configured to determine a third exponentially weighted moving average 824 for the observed first input variable over a respective third sampling duration (e.g., batch size of 16 bits or batch duration of 16 seconds) that is less than the second sampling duration and the maximum sampling duration; the moving average module 704 is configured to determine a fourth exponentially weighted moving average 826 for the observed first input variable over a respective fourth sampling duration (e.g., batch size of 8 bits or batch duration of 8 seconds) that is less than the third sampling duration and respective maximum sampling duration.

FIG. 7 is a block diagram of one embodiment of the winding temperature estimation module 104. In one embodiment, the winding temperature estimation module 104 comprises a pre-processing module 702 that is in communication with (or coupled to) a deep learning module 710, such as a deep learning module that has software instructions for a to-be-trained deep-learning model or a trained deep-learning model. The pre-processing module 702 comprises a moving average module 704 and a scaling module 706.

The modules (702, 704, 706, 710) of FIG. 7 may comprise one or more software modules, electronic modules, or both. In some embodiments, the modules of FIG. 7 may comprise software instructions that are stored within the data storage device 260 for execution by the data processor 264 or multiple data processors 264 that are coupled to the data bus 262. As used throughout this document, "configured to" means that a feature may comprise a software module or software instructions that are stored within the data storage device 260 for execution by the data processor 264 or multiple data processors 264 that are coupled to the data bus 262.

Input data variable data 302 is inputted into the pre-processing module 702. The input data variables can be provided by sensors 354 (e.g., voltage sensors, current sensors or both) coupled to the terminals (e.g., alternating current terminals) of the electric machine 117. For instance, the sensors 354 may comprise any of the following: (a) one or more voltage sensors coupled to the terminals (e.g., alternating current terminals) of the electric machine 117, and/or (b) one or more current sensors coupled to the terminals (e.g., alternating current terminals) of the electric machine 117. Meanwhile, temperature sensor 353 may be associated with or mounted in or on: (1) one or more windings (e.g., stator windings), (2) a housing (e.g., stator housing) or housing portion, (3) a coolant channel, a heat exchanger, tubing, or a radiator. For example, the temperature sensor 353 may be configured to measure or sense a coolant temperature sensor (e.g., coolant inlet temperature sensor, or oil inlet temperature sensor). Further, the sensing circuit 124 may provide an interface between the sensors (354, 353) and the electronic data processing system 120, such as filtering (e.g., low pass filter, bandpass filtering, or smoothing, integrating, scaling) the sensor signals.

In the pre-processing module 702 of the winding temperature estimation module 104 or in the sensing circuit 124, the scaling module 706 is configured to scale, filter, integrate, smooth, average, compress, amplify, attenuate, compress or otherwise adjust or process the digital sensor data (e.g., from one or more sensors 353, 354) to fall within a target range of magnitude values that are suitable for further data processing within the electronic data processing system 120 or by one or more electronic data processors 264. In the pre-processing module 702, the target range of magnitude values may be representative of subset of signal values of the analog sensor data or digital sensor data about a mean, mode or average of the signal values, for example. The moving average module 704 is configured to determine a moving average over a selected evaluation period comprising a series of successive time intervals, where each respective input datum (e.g., data stream) may have a discretely variable time period, a discrete time period, or a definable time period comprising one or more constituent time intervals.

The moving average values (e.g., exponentially weighted moving averages, 720, 722, 724, 726, 820, 822, 824, 826) are provided as inputs 708 to a neural network 710, such as deep-learning module 710, a to-be-trained deep-learning module, or trained deep learning module, which may comprise software instructions that are stored in the data storage device 260 for execution by one or more electronic data processors 264, where each electronic data processor may comprise multiple data-processing cores. In one embodiment, the neural network 710 (e.g., deep-learning module) comprises multiple layers (e.g., at least two layers) of nodes or neural nodes, where each node has a coefficient or weight that is assigned during a training process. The output (712 or 303) of the neural network 710 (e.g., deep-learning module) provides an estimated temperature of the winding of an electric machine 117.

As illustrated in FIG. 7, the neural network 710 (e.g., deep learning module that follows a deep learning model) has an input layer, such as a first layer 714 that is configured to receive the input data 708. The first layer 714 is configured to a communicate with a second layer 716, which is configured to communicate with a third layer 718, which is configured to communicate with an output layer or output node 720. Each layer (714, 716, 718, 720) comprises a set of one or more neural nodes that can propagate an input data 708 from one or more neural nodes of the first layer 714 to the second layer 716, from one or more neural nodes of the second layer 716 to the third layer 718, and from one or more neural nodes of the third layer 718 to the output node 720.

The neural network 710 comprises a recurrent neural network where one or more output nodes or downstream layers (720, 718, 716) can provide intermediate output state data or final output state data to one or more input nodes or nodes of first layer (714), such that the neural network 710 has or realizes internal states or memory.

In certain configurations, the neural network 710 comprises a recurrent neural network where any downstream layer can provide intermediate output state data or final output state data to one or more upstream layers, such that the neural network 710 has internal states or memory. The second layer 716, the third layer 718 and the output node 720 are downstream from the first layer 714. The third layer 718 is downstream from the first layer 714 and the second layer 716. The output node 720 is downstream from the first layer 714, the second layer 716, and the third layer 718. The first layer 714 is upstream of or from the second layer 716, the third layer 718 and the output node 720. The second layer 716 is upstream of or from the third layer 718 and output node 720. The third layer 718 is upstream of or from the output node 720. Accordingly, in FIG. 7, the lines that connect the layers (714, 716, 718, 729) or nodes may be illustrated without arrows or with arrow heads that are bidirectional because a recurrent neural network allows forwards propagation of data (e.g., input data 708 and intermediate data) through the neural network 710 in accordance with a downstream flow and backwards propagation of data (e.g., output data, 712 and intermediate data) through the neural network 710 in accordance with an upstream flow.

In general, the neural network 710 may incorporate a deep learning model, such software or software instructions. The neural network 710 comprises a minimum of a two layer deep neural network 710, such as stateful long short-term memory (LSTM) with truncated back propagation through time (TBTT) to predict or to estimate winding temperature of an electric machine 117, or other estimated temperatures over a long sequency time series prediction. The truncated- back-propagation-through-time approach (TBPTT) means that the neural network 710 comprises a recurrent neural network 710 where one or more output nodes can provide intermediate output state data or final output state data to one or more input nodes, such that the neural network 710 has internal states or memory. The stateful LSTM does not reset any states or memory between batches and the batch size must be specified before training.

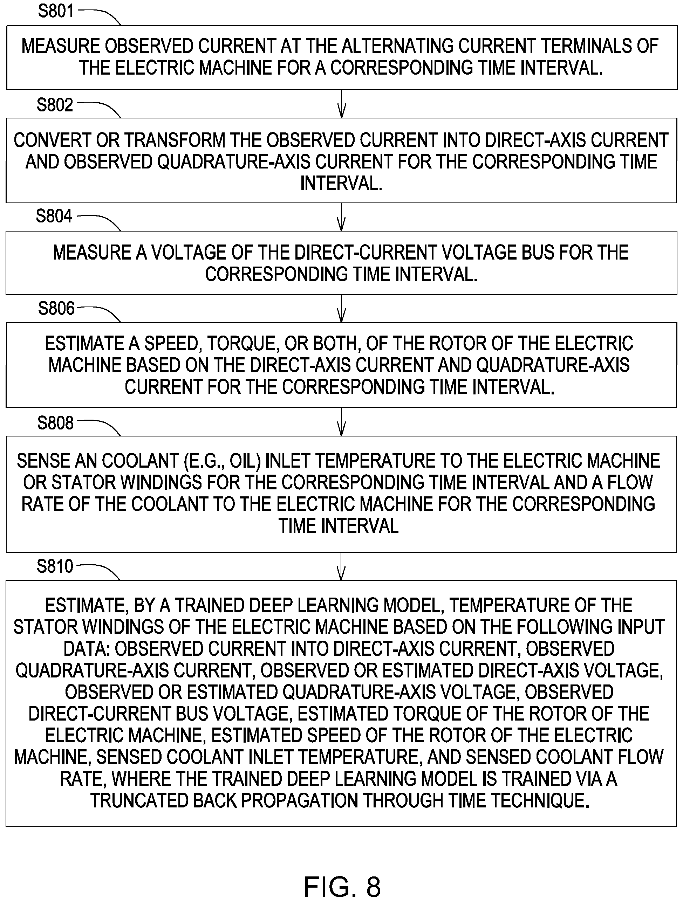

FIG. 8 is a flow chart of a first embodiment of a method for estimating a winding temperature for controlling an electrical machine (e.g., an electric motor with temperature compensation). The method of FIG. 8 begins in step S801.

In step S801, one or more current sensors 354 or a sensing circuit 124 is configured to measure observed current at the alternating current terminals of the electric machine 117 for a corresponding time interval or for a sequence of time intervals, such as a time window.

In step S802, the transform module or transformation module (e.g., 113) is configured to transform the observed current into direct-axis current and observed quadrature-axis current of the electric machine 117 for a corresponding time interval or for a sequence of time intervals, such as a time window.

In step S804, a voltage sensor is configured to measure voltage of the direct current voltage bus for the corresponding time interval. For example, the voltage sensor is coupled to the DC voltage bus of the inverter 188 that provides control signals or sinusoidal control signals to the electric machine 117 (e.g., in a motoring mode).

In step S806, an electronic data processor 264 or a data processing system 120 is configured to estimate a speed, torque or both of the rotor of the electric machine 117 based on the direct-axis current, the quadrature-axis current, or the alternating current (e.g., three-phase or three-phase-line-to-line currents). For example, an electronic data processor 264, a data processing system 120, a primary processing module 114 (e.g., position and speed processing module) is configured to estimate position data and speed data associated with the rotor of the electric machine 117 based on the direct-axis current, the quadrature-axis current, or the alternating current (e.g., three-phase or three-phase-line-to-line currents).

In step S808, one or more coolant sensors 353 are configured to sense a coolant (e.g., oil) inlet temperature of the electric machine 117 or stator windings for the corresponding time interval and a flow rate of the coolant into or from the electric machine 117 for the corresponding time interval or a sequence of sampling time intervals (e.g., time window).

In step S810 in accordance with a neural network 710 (e.g., trained deep learning model), the data processing system 120 is configured to estimate a temperature of the stator windings of the electric machine 117 based on the following input data: observed current into direct-axis current, observed quadrature-axis current, observed or estimated direct-axis voltage, observed or estimated quadrature-axis voltage, observed direct-current bus voltage, estimated torque of the rotor of the electric machine, estimated speed of the rotor of the electric machine, sensed coolant (inlet) temperature, and sensed coolant flow rate, wherein the neural network 710 (e.g., trained deep learning model) is trained in accordance with a truncated-back-propagation-through-time (TBPTT) technique or another recurrent neural network configuration.

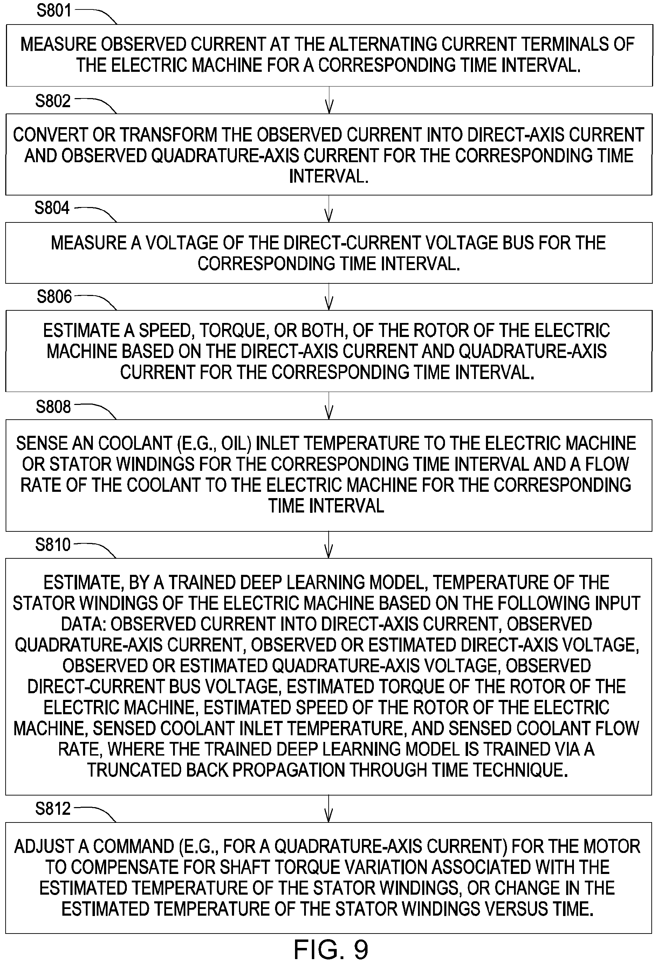

FIG. 9 is a flow chart of a second embodiment of a method for estimating a winding temperature for controlling an electrical machine 117 (e.g., an electric motor with temperature compensation). The method of FIG. 9 is similar to the method of FIG. 8, except the method of FIG. 9 further includes step S812. Like reference numbers in FIG. 8 and FIG. 9, or in any other set of two or more drawings in this disclosure, indicate like features, steps, procedures or elements.

In certain embodiments, step S812 may follow step S810. In step S812, a current adjustment module 107 (e.g., d-q axis current adjustment module) is configured to adjust (e.g., temporarily derate) a command (e.g., for a quadrature-axis current) for the electric machine 117 (e.g., motor) to compensate for shaft torque variation associated with the estimated temperature of the stator windings, or change in the estimated temperature of the stator windings versus time that is estimated by the winding temperature estimation module 104.

For example, in accordance with step S812, the current adjustment module 107 and/or the PWM modulation generation module 112 can be configured to apply control signals, via the inverter switching circuit 188, to the electric machine 117 that derate temporarily the operating power, the target operating region, or target operating curve (e.g., target torque versus target speed) of the electric machine 117 if the winding temperature estimation module 104 estimates that the observed winding temperature exceeds a threshold temperature to foster improved reliability of the electric machine 117 (e.g., to promote thermal dissipation until the winding temperature decreases below the threshold).

The method and system disclosed herein is well suited for achieving uniform torque of the electric machine 117 within a suitable tolerance (e.g., plus or minus five percent) of a target torque, regardless of variation in the temperature of the rotor magnets. For example, the temperature of the rotor magnets may vary because of a change in ambient temperature from weather conditions or because of the duty-cycle (e.g., continuous versus intermittent) of a vehicle or machine on which the motor operates. Further, the method and system disclosed herein is well-suited for improving machine operating efficiency under sundry magnet strength conditions.

The method and system disclosed herein can be used without any temperature sensor on the electric machine, or associated with the stators windings, to conserve space and to achieve higher power density of the electric machine. Alternately, the method and system disclosed herein can be used in conjunction with temperature sensor (e.g., as back-up temperature estimation to supplement the temperature sensor or as redundant (sensor-less) temperature estimation system).

Having described the preferred embodiment, it will become apparent that various modifications can be made without departing from the scope of the invention as defined in the accompanying claims.

**Claims**

1.  A method for controlling an electrical motor comprising a rotor with associated magnets and a stator, the method comprising:

    measuring observed current at the alternating current terminals of an electric machine for a corresponding time interval;
    converting or transforming the observed current into direct-axis current and observed quadrature axis current for the corresponding time interval;
    measuring a voltage of the direct-current voltage bus for the corresponding time interval,
    estimating a speed and torque of the electric machine based on the alternating currents or the direct-axis current and quadrature-axis current;
    sensing a coolant inlet temperature to the electric machine or stator windings for the corresponding time interval;
    sensing a flow rate of the coolant to the electric machine for the corresponding time interval; and
    in accordance with a trained deep learning model, estimating a temperature of the stator windings of the electric machine based on the following input data: observed current into direct-axis current, observed quadrature-axis current, observed or estimated direct-axis voltage, observed or estimated quadrature-axis voltage, observed direct-current bus voltage, estimated torque of the rotor of the electric machine, estimated speed of the rotor of the electric machine, sensed coolant inlet temperature, and sensing coolant flow rate, wherein the trained deep learning model is trained in accordance with a truncated back propagation through time technique.

2.  The method according to claim 1 wherein the sensed coolant flow comprises a stator flow rate and rotor flow rate.

3.  The method according to claim 1 or claim 2, wherein the deep learning model comprises a recurrent neural network or a long-short-term memory, LSTM, model.

4.  The method according to claim 1 or claim 2, wherein the deep learning model comprises one or more of the following: a feed forward network, a temporal convolutional neural network, and a convolutional neural network.

5.  The method according to any one of the preceding claims, further comprising:
    determining an exponentially weighted moving average of the input data during one or more successive time intervals based on a mean, a standard deviation, maximum and minimum values of said input data prior to applying the exponentially weighted moving average to the deep learning model.

6.  The method according to any one of the preceding claims, further comprising:
    determining a first exponentially weighted moving average of first input data during first time interval of a first duration of rolling mean, and a second exponentially weighted moving average of second input data during a second time interval of a second duration of a rolling mean, where the first duration is greater than the second duration, where the first durations provides a feedback component to the model.

7.  The method according to claim 6, further comprising:

    selecting the first inputs and corresponding first duration based on a Shapley Additive Explanations analysis;

selecting the second inputs and corresponding second duration based on a Shapley Additive Explanations analysis.

8. The method according to claim 6 or claim 7, further comprising:
scaling the magnitude levels of the signals or digital representations of the first inputs and the second inputs prior to application to the deep learning model.

9. The method according to any one of the preceding claims, further comprising:
training the deep neural network that comprises a long-short-term memory, LSTM, neural network by limiting the duration of the input data or a limited number of successive time intervals.

10. The method according to claim 9 further comprising:
training of the deep neural network with input data that is consistent with a truncated-back-propagation-through-time, TBPTT, technique to estimate or establish weights or coefficients of nodes within the deep neural network that comprises layers of nodes.

11. A system for estimating a temperature of a stator winding of an electrical machine, where the electric machine comprises a rotor with associated magnets and a stator, the system comprising:

a plurality of current sensors for measuring observed current at the alternating current terminals of an electric machine for a corresponding time interval;
a transform module for converting or transforming the observed current into direct-axis current and observed quadrature axis current for the corresponding time interval;
a voltage sensor for measuring a voltage of the direct-current voltage bus for the corresponding time interval,
a motion estimator to estimate a speed and torque of the electric machine based on the alternating currents or the direct-axis current and quadrature-axis current;
a coolant temperature sensor for sensing a coolant inlet temperature to the electric machine or stator windings for the corresponding time interval;
a flow rate sensor for sensing a flow rate of the coolant to the electric machine for the corresponding time interval; and
in accordance with a trained deep learning model, a data processor of a data processing system configured to estimate a temperature of the stator windings of the electric machine based on the following input data: observed current into direct-axis current, observed quadrature-axis current, observed or estimated direct-axis voltage, observed or estimated quadrature-axis voltage, observed direct-current bus voltage, estimated torque of the rotor of the electric machine, estimated speed of the rotor of the electric machine, sensed coolant inlet temperature, and sensing coolant flow rate, where the trained deep learning model is trained by a truncated back propagation through time technique.

12. The system according to claim 11 further comprising:
a current adjustment module for adjusting a command for the electric machine in the motor mode to compensate for shaft torque variation associated with the estimated change in the estimated temperature of the stator winding.

# FIG. 1

FIG. 1

| | |
|---|---|
| **Input variables (302)** | id |
| | iq |
| | vd |
| | vq |
| | dc_bus |
| | torque |
| | speed |
| | Stator_flow |
| | rotor_flow |
| | OilInletTemp or Coolant Temp |
| **Output (303)** | Motor_winding_temp |

FIG. 3

EP 4 531 272 A1

405

Window size k seconds for all input variables (408)

Input Variable X in Time (302)

| t-k | • • • | t-2 | t-1 | t | t+1 | t+2 |

404

Moving Average Module (704)

Mean/std/min/max (402) Calculator

Window Perior integrator (406)
(E.g., Summary statistics from k timesteps in past)

FIG. 4

FIG. 5

FIG. 6

FIG. 7

S801

MEASURE OBSERVED CURRENT AT THE ALTERNATING CURRENT TERMINALS OF THE ELECTRIC MACHINE FOR A CORRESPONDING TIME INTERVAL.

S802

CONVERT OR TRANSFORM THE OBSERVED CURRENT INTO DIRECT-AXIS CURRENT AND OBSERVED QUADRATURE-AXIS CURRENT FOR THE CORRESPONDING TIME INTERVAL.

S804

MEASURE A VOLTAGE OF THE DIRECT-CURRENT VOLTAGE BUS FOR THE CORRESPONDING TIME INTERVAL.

S806

ESTIMATE A SPEED, TORQUE, OR BOTH, OF THE ROTOR OF THE ELECTRIC MACHINE BASED ON THE DIRECT-AXIS CURRENT AND QUADRATURE-AXIS CURRENT FOR THE CORRESPONDING TIME INTERVAL.

S808

SENSE AN COOLANT (E.G., OIL) INLET TEMPERATURE TO THE ELECTRIC MACHINE OR STATOR WINDINGS FOR THE CORRESPONDING TIME INTERVAL AND A FLOW RATE OF THE COOLANT TO THE ELECTRIC MACHINE FOR THE CORRESPONDING TIME INTERVAL

S810

ESTIMATE, BY A TRAINED DEEP LEARNING MODEL, TEMPERATURE OF THE STATOR WINDINGS OF THE ELECTRIC MACHINE BASED ON THE FOLLOWING INPUT DATA: OBSERVED CURRENT INTO DIRECT-AXIS CURRENT, OBSERVED QUADRATURE-AXIS CURRENT, OBSERVED OR ESTIMATED DIRECT-AXIS VOLTAGE, OBSERVED OR ESTIMATED QUADRATURE-AXIS VOLTAGE, OBSERVED DIRECT-CURRENT BUS VOLTAGE, ESTIMATED TORQUE OF THE ROTOR OF THE ELECTRIC MACHINE, ESTIMATED SPEED OF THE ROTOR OF THE ELECTRIC MACHINE, SENSED COOLANT INLET TEMPERATURE, AND SENSED COOLANT FLOW RATE, WHERE THE TRAINED DEEP LEARNING MODEL IS TRAINED VIA A TRUNCATED BACK PROPAGATION THROUGH TIME TECHNIQUE.

FIG. 8

S801 —

MEASURE OBSERVED CURRENT AT THE ALTERNATING CURRENT TERMINALS OF THE ELECTRIC MACHINE FOR A CORRESPONDING TIME INTERVAL.

S802 —

CONVERT OR TRANSFORM THE OBSERVED CURRENT INTO DIRECT-AXIS CURRENT AND OBSERVED QUADRATURE-AXIS CURRENT FOR THE CORRESPONDING TIME INTERVAL.

S804 —

MEASURE A VOLTAGE OF THE DIRECT-CURRENT VOLTAGE BUS FOR THE CORRESPONDING TIME INTERVAL.

S806 —

ESTIMATE A SPEED, TORQUE, OR BOTH, OF THE ROTOR OF THE ELECTRIC MACHINE BASED ON THE DIRECT-AXIS CURRENT AND QUADRATURE-AXIS CURRENT FOR THE CORRESPONDING TIME INTERVAL.

S808 —

SENSE AN COOLANT (E.G., OIL) INLET TEMPERATURE TO THE ELECTRIC MACHINE OR STATOR WINDINGS FOR THE CORRESPONDING TIME INTERVAL AND A FLOW RATE OF THE COOLANT TO THE ELECTRIC MACHINE FOR THE CORRESPONDING TIME INTERVAL

S810 —

ESTIMATE, BY A TRAINED DEEP LEARNING MODEL, TEMPERATURE OF THE STATOR WINDINGS OF THE ELECTRIC MACHINE BASED ON THE FOLLOWING INPUT DATA: OBSERVED CURRENT INTO DIRECT-AXIS CURRENT, OBSERVED QUADRATURE-AXIS CURRENT, OBSERVED OR ESTIMATED DIRECT-AXIS VOLTAGE, OBSERVED OR ESTIMATED QUADRATURE-AXIS VOLTAGE, OBSERVED DIRECT-CURRENT BUS VOLTAGE, ESTIMATED TORQUE OF THE ROTOR OF THE ELECTRIC MACHINE, ESTIMATED SPEED OF THE ROTOR OF THE ELECTRIC MACHINE, SENSED COOLANT INLET TEMPERATURE, AND SENSED COOLANT FLOW RATE, WHERE THE TRAINED DEEP LEARNING MODEL IS TRAINED VIA A TRUNCATED BACK PROPAGATION THROUGH TIME TECHNIQUE.

S812 —

ADJUST A COMMAND (E.G., FOR A QUADRATURE-AXIS CURRENT) FOR THE MOTOR TO COMPENSATE FOR SHAFT TORQUE VARIATION ASSOCIATED WITH THE ESTIMATED TEMPERATURE OF THE STATOR WINDINGS, OR CHANGE IN THE ESTIMATED TEMPERATURE OF THE STATOR WINDINGS VERSUS TIME.

FIG. 9

| | | Europäisches Patentamt<br>European Patent Office<br>Office européen des brevets | **EUROPEAN SEARCH REPORT** | Application Number<br>EP 24 19 0400 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIRCHGASSNER WILHELM ET AL: "Estimating Electric Motor Temperatures With Deep Residual Machine Learning", IEEE TRANSACTIONS ON POWER ELECTRONICS, INSTITUTE OF ELECTRICAL AND ELECTRONICS ENGINEERS, USA, vol. 36, no. 7, 17 December 2020 (2020-12-17), pages 7480-7488, XP011842697, ISSN: 0885-8993, DOI: 10.1109/TPEL.2020.3045596 [retrieved on 2021-03-04] * abstract; figure 1 * * II. NN Architectures; page 7481 - page 7482; table 1 * * III.Test setup and validation; page 7482 - page 7483; table 2 * * IV.Bayesian optimization of hyperparameters; page 7483 - page 7484; tables 3-4 * * V.Optimization into a unified model; page 7484 - page 7487; figures 8-10; table 5 * | 1-12 | INV.<br>H02P29/64<br>G06N3/0442<br>H02P21/00<br>G06N3/044<br>G06N3/084<br>H02P29/66<br>G06N3/0464<br>G06N3/0499 |
| X | HOSSEINI SIAVASH ET AL: "Deep Neural Network Modeling for Accurate Electric Motor Temperature Prediction", 2022 IEEE CANADIAN CONFERENCE ON ELECTRICAL AND COMPUTER ENGINEERING (CCECE), IEEE, 18 September 2022 (2022-09-18), pages 170-175, XP034210828, DOI: 10.1109/CCECE49351.2022.9918222 [retrieved on 2022-10-17] * the whole document * | 1,11 | TECHNICAL FIELDS SEARCHED (IPC)<br><br>H02P<br>G06N |

-/--

The present search report has been drawn up for all claims

| Place of search | Date of completion of the search | Examiner |
|---|---|---|
| Munich | 24 October 2024 | Landi, Matteo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 19 0400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 004 164 A (UNIV SHANGHAI JIAOTONG) 1 February 2022 (2022-02-01) * paragraph [0063]; claims 1-10; figure 9 * | 1-12 | |

- - - - -

**TECHNICAL FIELDS SEARCHED (IPC)**

The present search report has been drawn up for all claims

| Place of search | Date of completion of the search | Examiner |
|---|---|---|
| Munich | 24 October 2024 | Landi, Matteo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 24 19 0400

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | Publication date | Patent family member(s) | Publication date |
|---|---|---|---|
| CN 114004164 A | 01-02-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63586694